# EUROPEAN PATENT SPECIFICATION

(11) **EP 4 088 557 B1**
(45) Date of publication and mention of the grant of the patent: **16.04.2025**
(21) Application number: 21738934.5
(22) Date of filing: 06.01.2021
(51) Int. Cl.: G05D 1/00, A01D 34/00

(54) **AUTOMATIC OPERATION SYSTEM**
AUTOMATISCHES BETRIEBSSYSTEM
SYSTÈME DE FONCTIONNEMENT AUTOMATIQUE

(30) Priority: 06.01.2020 CN 202010010480; 24.04.2020 CN 202010331902
(43) Date of publication of application: 16.11.2022
(73) Proprietor: Positec Power Tools (Suzhou) Co., Ltd., Suzhou, Jiangsu 215123 (CN)
(72) Inventor: HE, Mingming, Suzhou, Jiangsu 215123 (CN); WANG, Yong, Suzhou, Jiangsu 215123 (CN); ZHU, Song, Suzhou, Jiangsu 215123 (CN)
(74) Representative: Kilburn & Strode LLP
(86) International application number: PCT/CN2021/070485
(87) International publication number: WO 2021/139685

(56) References cited:
- CN-A- 107 637 255
- CN-A- 108 781 705
- CN-A- 110 612 806
- CN-U- 208 095 201
- US-A1- 2013 238 130
- US-A1- 2018 160 619
- US-A1- 2018 317 384
- US-A1- 2019 384 316

## Description

### Technical Field

The present invention relates to the field of intelligent control, and in particular, to an automatic operation system.

### Background

Lawn maintenance requires a lot of manual labor, including constant watering, fertilizing, and mowing the lawn to maintain a healthy grass coverage. Although watering and fertilizing can sometimes be handled with minimal labor by using a sprinkler or a watering system, a mowing process is a process that requires a lot of manual labor of a gardener.

US2019384316A1 discloses a smart lawn mower comprises a traveling control module configured to control the traveling and steering of the mower, an image capturing module configured to capture the surrounding images of the mower, an operation module configured to provide a surrounding-determination information, and a storage module configured to store the surrounding-determination information. The operation module determines a grass area by analyzing the surrounding images captured by the image capturing module. The mower defines a grass area accurately without a predetermined boundary.

A designer and a manufacturer of a lawn mower has made attempts for some time to manufacture an autonomous lawn mower to replace a conventional push-pull lawn mower. However, due to immaturity of technologies such as identification of an operation region, construction of a map, and planning of a moving path, operation performance of an intelligent lawn mower still remains to be improved.

Therefore, it is necessary to design a new technical solution to resolve the above technical problems.

### SUMMARY

Technical problems are to be solved by the present invention. An intelligent lawn mower having an image capturing module at a different operation position is provided.

Aspects of an invention are set out in claim 1. Optional features of embodiments are set out in the remaining claims.

Compared with the prior art, the beneficial effects of the technical solution of the present invention are as follows. The operation positions of the image capturing module in the intelligent lawn mower in different operation modes are adjusted, that is, the lawn mower respectively has different operation positions in the mowing mode and the monitoring mode, so as to ensure that the intelligent lawn mower can achieve the most efficient operation effect in different operation modes.

### BRIEF DESCRIPTION OF THE DRAWINGS

The foregoing objects, technical solutions, and beneficial effects of the present invention can be implemented with reference to the accompanying drawings below:
FIG. 1 is a three-dimensional view of an intelligent lawn mower according to an embodiment of the present invention.
FIG. 2 is a schematic diagram of a sensor installation compartment at a first operation position according to an embodiment of the present invention.
FIG. 3 is a schematic diagram of a sensor installation compartment at a second operation position according to an embodiment of the present invention.
FIG. 4 and FIG. 5 are schematic diagrams of an operation process of an adjustment unit according to an embodiment of the present invention.
FIG. 6 is a schematic diagram of an automatic operation system according to an embodiment of the present invention.
FIG. 7 and FIG. 8 are schematic diagrams of functional modules and a structure of a lawn mower according to an embodiment of the present invention.
FIG. 9 and FIG. 10 are schematic structural diagrams of a lawn mower according to another embodiment of the present invention.
FIG. 11 to FIG. 13 are schematic diagrams of an operation scenario of a lawn mower according to the present invention.

### DETAILED DESCRIPTION

Detailed descriptions and technical content of the present invention are described below in cooperation with the accompanying drawings. However, the accompanying drawings only provide reference and description rather than limit the present invention.

The following clearly and completely describes the technical solutions in the embodiments of the present invention with reference to the accompanying drawings in the embodiments of the present invention. Apparently, the described embodiments are merely some but not all of the embodiments of the present invention.

Unless otherwise defined, meanings of all technical and scientific terms used in this specification are the same as that usually understood by a person skilled in the art to which the present disclosure belongs. In this specification, terms used in the specification of the present invention are merely intended to describe objectives of the specific embodiments, but are not intended to limit the present invention. In addition, the term "and/or" as used herein includes any and all combinations of one or more related listed items.

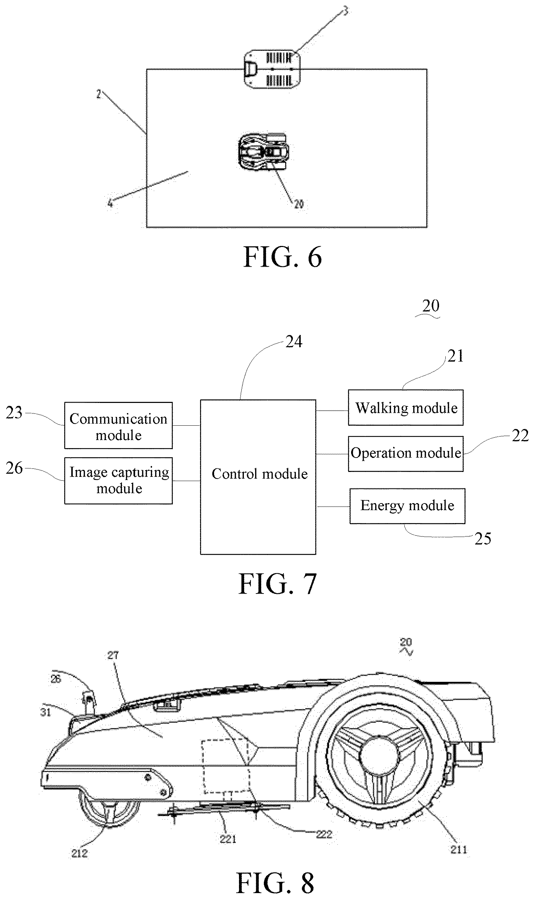

FIG. 6 shows an automatic operation system of this specific implementation. The automatic operation system may include an intelligent lawn mower 20, a boundary 2, and a charging station 3. The intelligent lawn mower 20 moves and operates within a mowing region 4 defined by the boundary 2, and the charging station 3 may be configured to receive docking of the intelligent lawn mower to supplement the intelligent lawn mower with energy in a case that the intelligent lawn mower returns due to insufficient energy.

As shown in FIG. 7 and FIG. 8, the intelligent lawn mower 20 may include a housing 27, and may further include a moving module 21, an operation module 22, a communication module 23, a control module 24, and an energy module 25. The control module 24 is connected to and configured to control the moving module 21 and the operation module 22, so as to realize automatic moving and operation of the intelligent lawn mower 20.

Specifically, the moving module 21 may include a wheel set, which includes a right driving wheel and a left driving wheel, and a moving motor configured to drive the wheel set. Generally, the wheel set includes a driving wheel 211 driven by the moving motor and an auxiliary wheel 212 assisting in supporting the housing. It may be understood that the moving module 21 may also be a track structure. In this embodiment, the right driving wheel and the left driving wheel each are equipped with a driving motor to achieve differential output for steering control. The moving motor may be directly connected to the driving wheel, or a transmission apparatus may be arranged, that is, a same motor drives the right driving wheel and the left driving wheel through different transmission apparatuses, so as to achieve the differential output for steering control. The operation module 22 is a cutting module, such as a cutting blade 221, which may be driven by a cutting motor 222 to operate. A center of the operation module 22 is located on a central axis of the lawn mower 20, is set below the housing and between the auxiliary wheel and the driving wheel, or may be offset to a left side or a right side of the housing. The energy module 25 is fixedly or detachably mounted to the housing, which may be a battery pack, or the like. During operation, the battery pack discharges electric energy to maintain operation and moving of the lawn mower 20. During non-operation, the battery may be connected to an external power supply to be supplemented with electric energy. The intelligent lawn mower 20 may also automatically search for the charging station 3 to be supplemented with electric energy when detecting that the battery is low. The control module 24 may be a controller, which may be configured to control the intelligent lawn mower 20 to move, turn, and automatically operate according to a preset program or a received instruction. The communication module 23 may include, but is not limited to, at least one of the following: a Wi-Fi module, a Bluetooth module, an infrared module, or a cellular communication module such as a 4G or 5G module.

The automatic operation system may include a navigation mechanism, which may include but is not limited to at least one of the following: a UWB sensor, an inertial navigation device, a satellite navigation system (GPS, Beidou, RTK, and the like), or an image capturing module 26 (also referred to as a visual sensor or a camera in this application). When the image capturing module configured to identify a boundary is arranged on the lawn mower, the lawn mower may operate in an operation region in a manner of a random move, and identifies the boundary by using the image capturing module 26, to ensure safety of the lawn mower. Alternatively, navigation may be realized through a combination of a low-precision satellite navigation system and the image capturing module 26, that is, a combination of a low-precision GPS and a visual sensor.

In an embodiment of this application, the automatic operation system includes the image capturing module 26 configured to identify the boundary. The image capturing module may be configured to assist in the mowing and monitoring. The operation region may include a mowing region and a monitoring region. The two regions may overlap each other. During mowing of the lawn, the lawn mower cuts grass in the mowing region, and the image capturing module may be configured to identify the boundary of the operation region. During monitoring, the lawn mower performs monitoring in the monitoring region, and the image capturing module may capture image information nearby to determine whether the captured image information is abnormal. If an abnormality exists, the image capturing module sounds the alarm or sends a notification message to a user.

The intelligent lawn mower identifies the boundary of the operation region by using the visual sensor, to control the intelligent lawn mower to normally move within the boundary, thereby ensuring the safety of the lawn mower in the operation process. In this application, the intelligent lawn mower may also monitor the external environment by using the visual sensor, to prevent the lawn mower from being stolen, thereby ensuring safety of the user. Certainly, the lawn mower may also include other operation modes such as mapping, which is not limited in this application. Generally, when the boundary is identified, a field of view of the visual sensor is inclined downward, so that the intelligent lawn mower can efficiently identify the boundary between grass and non-grass or a short obstacle, to prevent occurrence of an unsafe phenomenon such as going out of bounds. During the monitoring, the field of view of the visual sensor is generally parallel to or inclined upward from the ground, so as to efficiently monitor the vicinity of the lawn mower.

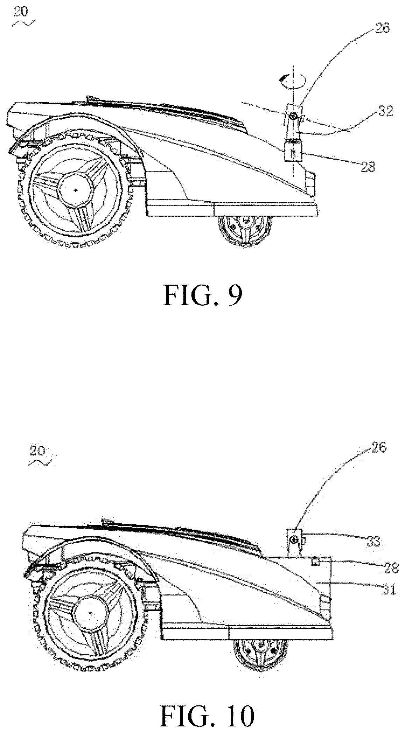

Considering that during the monitoring by using the intelligent lawn mower mounted with the visual sensor, if the field of view during identification of the boundary is used, the lawn mower is not be able to observe a distant object in advance, and a monitoring effect becomes poor. In this application, an intelligent lawn mower is provided. An image capturing module is mounted on the intelligent lawn mower, and is configured to capture image information near the intelligent lawn mower, and control movement and/or operation of the intelligent lawn mower according to the captured image information. The intelligent lawn mower includes at least two operation modes. When the intelligent lawn mower operates in the at least two operation modes, the image capturing module has at least two operation positions relative to the housing. Specifically, the lawn mower may include two operation modes: a mowing mode and a monitoring mode. Correspondingly, the image capturing module has a first operation position in the mowing mode, which is generally inclined downward from the ground. That is, an angle between a center line (or a central axis) of the field of view of the image capturing module and a vertical line ranges from 30 degrees to 60 degrees, which is shown by two dotted lines in FIG. 9. The image capturing module has a second operation position in the monitoring mode, which is generally parallel to or inclined upward from the ground. That is, an angle between a center line (or the central axis) of the field of view of the visual sensor and the vertical line ranges from 70 degrees to 110 degrees. The lawn mower is adjusted to a corresponding operation position in different operation modes, and therefore has a better operation effect in different operation modes.

In an embodiment of this application, the intelligent lawn mower may further include an actuating mechanism, configured to be connected to the housing and the image capturing module. The control module is configured to control the actuating mechanism to drive the image capturing module to switch between the first operation position and the second operation position. That is, when the lawn mower switches the operation mode, the lawn mower is adjusted to the corresponding operation position through the actuating mechanism.

In an embodiment of this application, the actuating mechanism may include a lifting unit 32. The control module is configured to control the lifting unit 32 to drive the image capturing module to ascend and/or descend from the first operation position to the second operation position, which may be realized through a lifting cylinder. As shown in the schematic diagram of the lawn mower in the mowing mode in FIG. 9, when the lawn mower switches to the monitoring mode, a camera may be controlled to descend to the second operation position.

In another embodiment of this application, the actuating mechanism may further include a rotatable unit 33. The control module controls the rotatable unit 33 to drive the image capturing module to rotate from the first operation position in a vertical direction by a preset angle to the second operation position, which may be realized by driving a rotary shaft by a motor 28. When the lawn mower shown in FIG. 9 is switched to the monitoring mode shown in FIG. 10, the rotatable unit 33 may be controlled to rotate upward by a preset angle in the vertical direction to reach the second operation position. When the lawn mower is in the mowing mode, the image capturing module is at a higher position relative to the housing, and an angle between the image capturing module and a horizontal plane is relatively small, which is convenient for the image capturing module to identify the boundary and the short obstacle as soon as possible. When the lawn mower is in the monitoring mode, the image capturing module is at a lower position relative to the housing, and an angle between the image capturing module and the horizontal plane is relatively large, which is convenient for the image capturing module to identify other target objects such as a person as soon as possible.

In an embodiment, as shown in FIG. 8, the intelligent lawn mower may further include an accommodating cavity 31 arranged at a front end of the housing. The accommodating cavity is configured for the image capturing module to be mounted, the accommodating cavity has a set depth, and the image capturing module is partially or completely accommodated in the accommodating cavity. Further, a shielding cover is further arranged on the housing, and is configured to shield the accommodating cavity. When the lawn mower stops operating and moves in other operation modes that require no camera through satellite navigation, the camera may be received in the accommodating cavity manually through a button arranged on the housing or through remote control of a mobile phone, so that the camera can be protected and the service life of the camera can be prolonged.

In an embodiment of this application, the lawn mower may be switched between the mowing mode and the monitoring mode according to the received instruction from the user, a mowing schedule, and a monitoring schedule. Specifically, when the lawn mower is in the mowing mode, if a control instruction to switch to the monitoring mode sent by the user is received, the control module may control the lawn mower to switch to the monitoring mode, and vice versa. Alternatively, when a machine leaves a factory, the lawn mower may be set to be in the mowing mode from 10:00 a.m. to 5:00 p.m. on weekdays and to be in the monitoring mode from 6:00 p.m. to 10:00 p.m. on weekdays. If a current time is 11 a.m. on Thursday, the lawn mower is in the mowing mode. If the current time is 8 p.m. on Thursday, the lawn mower is in the monitoring mode.

In another embodiment of this application, the lawn mower is in the monitoring mode when the lawn mower returns to or at the charging station for charging. Specifically, when a low battery is detected during the mowing, the control module may control the lawn mower to switch from the mowing mode to the monitoring mode and to move to the charging station under guidance of GPS and a magnetic strip, and perform the monitoring during the charging. Alternatively, when a low battery is detected during the mowing, the control module may control the lawn mower to return to the charging station. During charging of the lawn mower after arriving at the charging station, the control module controls the lawn mower to switch to the monitoring mode. When the lawn mower is fully charged, the control module controls the lawn mower to enter the mowing mode again and to move from the charging station to the operation region where the mowing is performed to perform the mowing. The user may arrange the charging station at a position that is required to be monitored, such as near a door of a house, so that the lawn mower can be monitored at the charging station.

In one embodiment of this application, the intelligent lawn mower further includes a state switching mode. In the state switching mode, the control module controls the image capturing module to maintain an operation position before switching, and controls the lawn mower to move from a current position to the preset monitoring position and/or the preset monitoring region and/or the mowing region. When an initial state of the lawn mower is the mowing mode and is required to be switched to the monitoring mode, only when the lawn mower reaches the preset monitoring position and/or the preset monitoring region, the lawn mower is controlled to switch to the monitoring mode, and is controlled to perform the monitoring at the preset monitoring position and/or in the preset monitoring region. In this case, the cutting module stops the cutting. Before the lawn mower reaches the monitoring region, the image capturing module maintains the operation position before switching and identifies the boundary through the image capturing module, to prevent an unsafe event such as going out of bounds. When the initial state of the lawn mower is the monitoring mode and is required to switch to the mowing mode, the lawn mower is controlled to switch to the mowing mode and to perform the mowing in the mowing region when the lawn mower reaches the mowing region. In this embodiment of this application, when the lawn mower is switched to the monitoring mode, the visual sensor is adjusted to the second operation position with a higher field of view. However, when the lawn mower has the higher field of view, the lawn mower cannot normally identify the boundary, a small animal, and the short obstacle, which may cause harm to a pedestrian or the small animal during the moving. Therefore, the lawn mower may be controlled to switch the operation mode after receiving a switching instruction and moving to the corresponding operation region. For example, monitoring is continuously performed after the lawn mower reaches a preset monitoring position or a preset monitoring region, to ensure safety of the lawn mower itself and the small animal.

In another embodiment of this application, the lawn mower may also be immediately switched to the corresponding operation mode when receiving the switching instruction, and moves to the corresponding region in the operation mode. The initial state of the lawn mower is the mowing mode. The lawn mower is immediately switched to the monitoring mode when receiving the instruction to switch to the monitoring mode, the position of the visual sensor is adjusted to the second operation position, and the lawn mower is guided to the preset monitoring position in a navigation mode such as GPS. When the lawn mower reaches the preset monitoring position and/or the preset monitoring region, the monitoring is performed at the position or in the region.

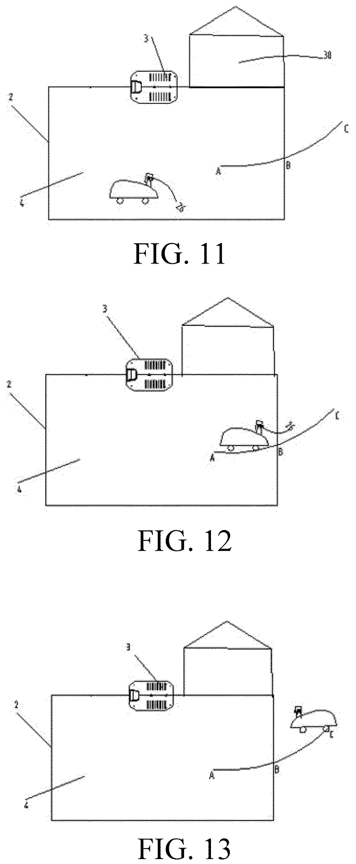

In an operation scenario of the automatic operation system shown in FIG. 11 to FIG. 13, except for the boundary 2, a magnetic apparatus (for example a magnetic strip and an encoded magnetic strip) is arranged in the operation region by using a position A as a starting point and a position C as an end point. A visual beacon is set at or near the position A, and the visual sensor may identify the current position according to the collected beacon. Similarly, the visual beacon is also set at or near the position C. A line connecting A to C may also be a barcode (for example, a QR code), and the visual sensor determines the current position by identifying the QR code. Alternatively, a region may be laid by using the magnetic strip, so that the lawn mower can identify the QR code in the monitoring mode to complete path guidance in the region.

In this application scenario, the visual beacon arranged at the position A and the position C is used as an example. As shown in FIG. 11, the lawn mower is in the mowing mode, and the visual sensor mounted on the lawn mower is at the first operation position (for example, an angle between a central axis of a field of view of a visual sensor and a vertical line is 40 degrees). When the lawn mower receives an instruction to switch to the monitoring mode, the control module controls the lawn mower to enter the state switching mode, maintains the lawn mower in the mowing mode that identifies the boundary, and stops moving and/or mowing. Beacons at the position A and the position C are stored in the lawn mower. In the monitoring mode, the lawn mower moves near the magnetic strip and determines the current position according to the identified visual beacon. When the lawn mower reaches the position A shown in FIG. 12, the lawn mower is controlled to move along the magnetic strip to the position C shown in FIG. 13. After the lawn mower reaches the position C, the control module controls the lawn mower to switch to the monitoring mode, and controls the visual sensor to rotate upward by a predetermined angle in the vertical direction to reach the second operation position (for example, the angle between the central axis of the field of view of the visual sensor and the vertical line is 110 degrees). The vicinity of the lawn mower is monitored at the position C. The cutting module always maintains the state of stopping cutting during the monitoring. On the contrary, when the lawn mower is in the monitoring mode, and when an instruction to switch to the mowing mode is received, the control module controls the lawn mower to stop moving and operating. The lawn mower is controlled to move along the magnetic strip from the position C to the position A, and after the lawn mower reaches the position A, the control module controls the visual sensor to rotate upward by the predetermined angle of 40 degrees in the vertical direction, and controls a mowing module to start mowing. That is, when the lawn mower is switched from the monitoring mode to the mowing mode, the lawn mower may perform the mowing only when the lawn mower reaches the operation region where the mowing can be performed. Through the above method, the lawn mower does not harm the pedestrian and the animal in the monitoring mode, so as to ensure the safety of the lawn mower. Further, the visual beacon may also be set at an intersection of the magnetic strip and the boundary, that is, at the position B. The lawn mower starts mowing when reaching the position B.

In an embodiment of this application, a distance detection module is mounted to the lawn mower and is configured to detect a distance between the user and the lawn mower when the lawn mower does not reach the corresponding operation position (such as the position A or the position C in the above embodiment) during the mode switching. Specifically, the distance detection module may be a communication module, and determines the distance between the user and the lawn mower depending on whether a signal is received or according to a strength of the received signal. The distance detection module may be a near field communication module, such as a Bluetooth module, an NFC module, and the like. When it is detected that the distance between the user and the lawn mower is less than or equal to a preset distance, an alarm may be sounded or a notification message related to safety reminders may be sent to the client. In this embodiment, the distance between the user and the lawn mower is controlled to ensure that the user is always near the lawn mower during the mode switching of the lawn mower, so as to ensure the safety of the lawn mower and the pedestrian and the animal nearby.

In another embodiment of this application, the lawn mower may also build a map of the entire operation region by using low-precision GPS, and capture the image information by using the image capturing module during the operation or moving of the lawn mower. The operation region includes three parts: an operation region where only the mowing mode is executed, an operation region where only the monitoring mode is executed, and an operation region where both the mowing mode and the monitoring mode can be executed. In an embodiment of this application, when the lawn mower is required to switch the operation mode, the lawn mower may be controlled to move to the corresponding operation region, and switch to the operation mode such as the mowing mode or the monitoring mode after reaching the corresponding operation region for the mowing or the monitoring, thereby ensuring the safety and efficient operation of the lawn mower.

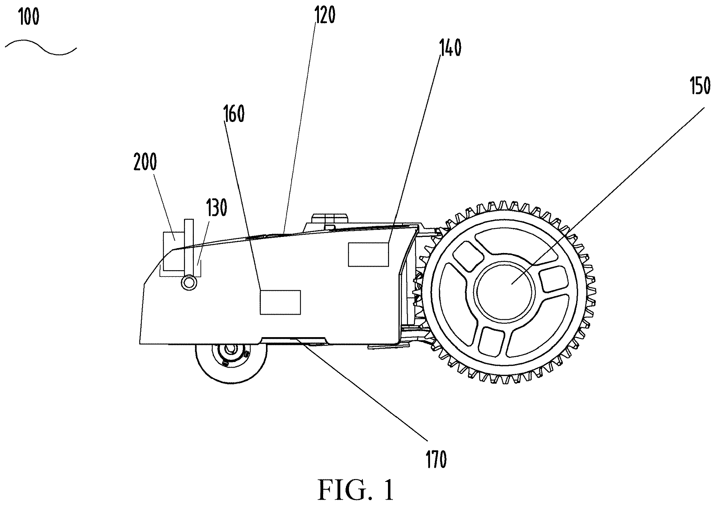

FIG. 1 shows a three-dimensional view of an intelligent lawn mower 100 according to an embodiment of the present invention. The intelligent lawn mower 100 can move and operate within an operation region defined by a boundary, and includes: a housing 120; a moving module 150, configured to drive the intelligent lawn mower 100 to move; a cutting module 170, configured to perform cutting of the intelligent lawn mower 100; an energy module 140, configured to provide energy for the intelligent lawn mower 100 for the intelligent lawn mower 100 to move and operate, where specifically, the energy module 140 includes a battery pack, and when the energy stored in the energy module 140 is insufficient, the intelligent lawn mower 100 can return to a docking station to be supplemented with energy, and leave the charging station after the charging is completed; and a control module 160, electrically connected to the moving module 150 and the cutting module 170 and configured to control the movement and the operation of the intelligent lawn mower 100, where specifically, the control module 160 can control the intelligent lawn mower 100 to perform different movement and operation strategies according to different scenarios. Specifically, the operation region of the intelligent lawn mower 100 is defined by the boundary. The common boundary includes a boundary line that generates a magnetic field in response to an applied current, a boundary label that can identify information, and a virtual boundary composed of a plurality of pieces of boundary positioning data. The intelligent lawn mower 100 includes various types of sensors corresponding to the operation region to identify various boundary types in different scenarios. For example, a magnetic sensor identifies a magnetic field region to determine the operation region, the visual sensor identifies a boundary pattern to determine the operation region, or current positioning information of the intelligent lawn mower is acquired and compared with the boundary position information to determine that the intelligent lawn mower is inside the operation region. The intelligent lawn mower 100 may plan a moving path according to preset moving logic when moving in the operation region, and continuously detect different information in the operation region during the moving to determine whether the moving path is required to be adjusted in time. For example, an avoidance measure is taken when the obstacle is encountered. Therefore, the intelligent lawn mower 100 is required to carry a plurality of sensors to adapt to a complex operation condition of the operation region. In this embodiment, the intelligent lawn mower 100 further includes a sensor installation compartment 130 arranged on the housing 120. The sensor installation compartment may be configured for a sensor module 200 to be mounted, and the intelligent lawn mower 100 may match a plurality of different sensor modules 200 to realize different identification functions, which affects the movement and operation strategy of the intelligent lawn mower 100. Specifically, the sensor module 200 may include the visual sensor configured to visually identify grass quality, a shadow region, and an obstacle in the operation region. The sensor module may include an ultrasonic sensor, configured to transmit an ultrasonic signal and receive an echo signal to determine whether the intelligent lawn mower 100 encounters the obstacle and perform an avoidance function when it is determined that the obstacle is encountered. The sensor module further includes other similar sensors configured to identify the operation region. These sensors can identify a specific operation condition in the operation region, and perform a corresponding action according to a processing logic preset by the intelligent lawn mower 100. The sensor installation compartment 130 is configured to have a first operation position and a second operation position different from the first operation position.

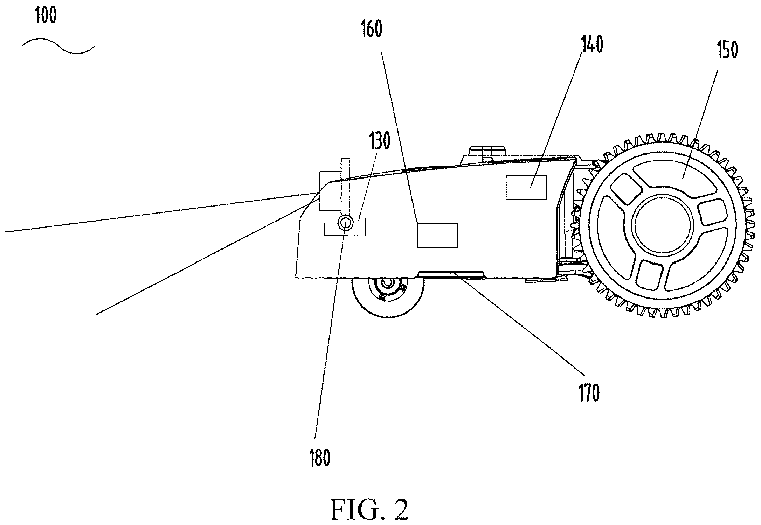

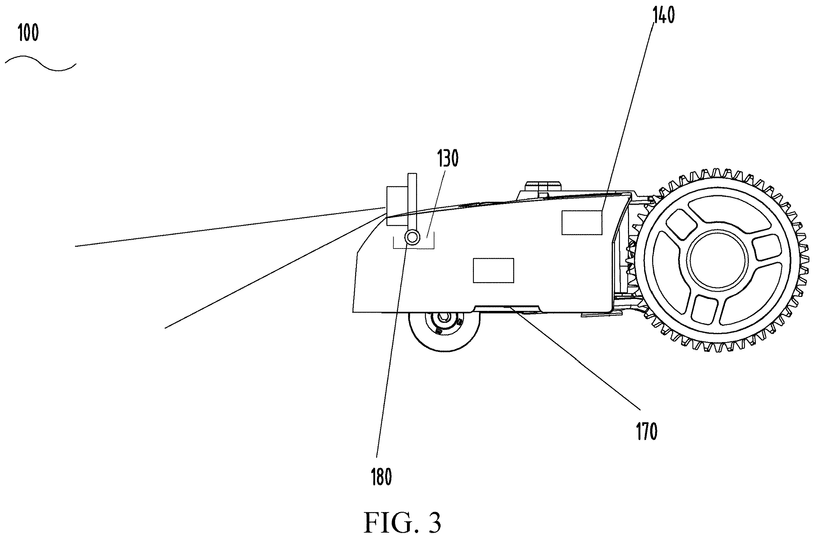

Referring to FIG. 2 and FIG. 3, FIG. 2 and FIG. 3 are schematic diagrams of the sensor installation compartment 130 at the first operation position and the second operation position according to an embodiment of the present invention. The intelligent lawn mower 100 includes the sensor installation compartment 130, and the user may select a different sensor module 200 for the intelligent lawn mower 100 according to their own requirements and mount the sensor module in the sensor installation compartment 130. Specifically, the sensor installation compartment 130 has an interface, through which the sensor module 200 is detachably mounted to the sensor installation compartment 130. Specifically, the sensor module 200 may be electrically connected to the control module 160 of the intelligent lawn mower 100, and detection information of the sensor module 200 is transmitted to the control module 160, and the control module 160 processes and executes the corresponding control strategy. In this embodiment, the sensor module 200 is described with the visual sensor. It should be noted that, in other embodiments, various different types of sensor modules 200 may be mounted on the intelligent lawn mower 100 to satisfy diversified requirements of the intelligent lawn mower 100. The visual sensor includes an image capturing unit, usually a camera, which can capture image information in the operation region, and process the image information and extract useful information to adjust the moving strategy, the cutting strategy, and the like of the intelligent lawn mower 100 according to the information. Specifically, in this embodiment, the intelligent lawn mower 100 includes a positioning module (not shown). The intelligent lawn mower 100 can acquire satellite positioning information through the positioning module, such as GPS, GNSS, a Beidou satellite, and the like. The intelligent lawn mower 100 determines the operation boundary of the intelligent lawn mower 100 through the positioning information, and the intelligent lawn mower 100 is controlled to move and operate within the operation region after the boundary is determined. In addition, the intelligent lawn mower 100 may determine an operation map of the operation region through the positioning module, for example, determine where an island region is located or where a poorly located shadow region is located, and the intelligent lawn mower 100 accordingly generates the map of the operation region and controls the movement and cutting strategy of the intelligent lawn mower 100. Specifically, an operation condition in the operation region is required to be confirmed, and the map is built according to the operation condition, or the map is updated after the map is built. The visual sensor may be configured to identify environmental information in the operation region. For example, after a flower bed is identified, the flower bed is determined as a region that does not require operation, and a region having insufficient light is identified as a region with low cutting frequency. Such information is updated into the operation region map, which facilitates more accurate and more efficient cutting by the intelligent lawn mower 100. Therefore, the visual sensor arranged for the intelligent lawn mower 100 can effectively improve an operation effect and use experience of the intelligent lawn mower 100.

When the intelligent lawn mower 100 performs the operation in the operation region, the obstacle may exist in the operation region, such as a large rock, a small animal, and the like, and the intelligent lawn mower 100 is required to avoid these obstacles to perform the operation. Generally, the intelligent lawn mower 100 is equipped with a collision detection sensor, such as a Hall sensor, and executes the avoidance strategy when a collision is detected, so as to avoid affecting normal operation of the intelligent lawn mower 100 after encountering the obstacle. In some cases, the intelligent lawn mower 100 may be equipped with the visual sensor. The visual sensor detects an image in the operation region. It may be determined by processing these images whether the intelligent lawn mower 100 encounters the obstacle, and the avoidance strategy is executed after it is determined that the obstacle is encountered. The identification of the obstacle by the visual sensor is more accurate. Different obstacle avoidance strategies may be executed for different types of obstacles. Moreover, the identification of the obstacle by the visual sensor can realize non-contact obstacle avoidance, so that the intelligent lawn mower 100 can detect the obstacle as early as possible and execute the avoidance strategy. When the intelligent lawn mower 100 requires the visual sensor to assist mapping, the visual sensor identifies a condition of a surface of the operation region, so as to identify a preset scenario and cause the intelligent lawn mower 100 to perform a corresponding control action. When the intelligent lawn mower 100 requires the visual sensor to identify the obstacle in the operation region, the intelligent lawn mower 100 identifies whether an obstacle exists ahead in a direction of advance, so as to control execution of a corresponding avoidance behavior. Specifically, referring to FIG. 1, when the visual sensor performs the identification of the surface of the operation region, the sensor installation compartment 130 is at the first operation position. Referring to FIG. 2, when the visual sensor performs the identification in the direction of advance of the intelligent lawn mower 100, the sensor installation compartment 130 is at the second operation position.

The sensor installation compartment 130 has a first operation position and a second operation position, and the first operation position and the second operation position have different heights. Specifically, during identification of the surface of the operation region, that is, when the intelligent lawn mower 100 identifies the condition of the surface of the operation region to assist the mapping, the visual sensor is at a lower position relative to the housing 120 is relatively low, so that the field of view of the visual sensor mainly covers the surface of the operation region. During identification of an object ahead in the direction of advance of the intelligent lawn mower 100, the visual sensor is at a higher position relative to the housing 120. The sensor installation compartment 130 is arranged to have the first operation position and the second operation position, so that the sensor module 200 mounted therein have different operation positions. A different position has a different field of view. Therefore, usage requirements in different scenarios can be satisfied, and a plurality of sets of sensor modules 200 are not required to be mounted simultaneously to satisfy the usage requirements for the different scenarios of the sensor modules. In this embodiment, when the sensor installation compartment 130 is at the first operation position, the sensor installation compartment 130 is at a lower position relative to the housing 120, and the visual sensor mounted therein is configured to identify information on the surface of the operation region. When the sensor installation compartment 130 is at the second operation position, the sensor installation compartment 130 is at a higher position relative to the housing 120, and the visual sensor mounted therein is configured to identify the object in the direction of advance of the intelligent lawn mower 100.

In this embodiment, the sensor installation compartment 130 has a first operation position and a second operation position. An angle of rotation exists between the first operation position and the second operation position in a horizontal direction. Specifically, when the sensor module 200 is mounted in the sensor installation compartment 130, for example, when the visual sensor is mounted therein, the sensor installation compartment 130 is arranged to be rotatable in the horizontal direction to have the first operation position and the second operation position, so that the visual sensor has a larger field of view.

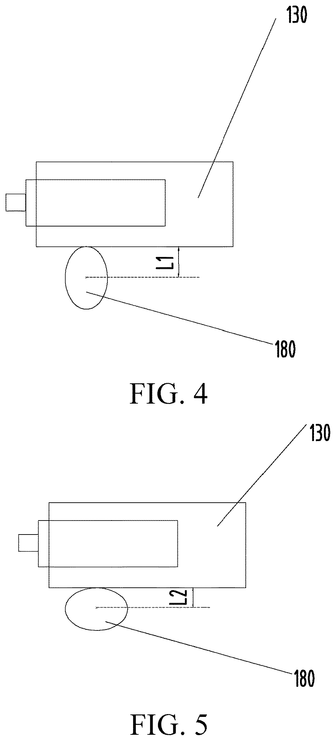

The intelligent lawn mower 100 includes an adjustment unit 180. The adjustment unit 180 is connected to the sensor installation compartment 130. The position of the sensor installation compartment 130 is adjusted by the adjustment unit 180 so that the sensor installation compartment 130 is at the first operation position or the second operation position. Referring to FIG. 4 and FIG. 5, specifically, the adjustment unit 180 includes a cam mechanism. The cam mechanism has a short-range axial surface and a long-range axial surface, and the cam mechanism rotates so that the short-range axial surface or the long-range axial surface contacts the sensor installation compartment 130. When the short-range axial surface contacts the sensor installation compartment 130, the sensor installation compartment 130 has the first operation position. In this case, the sensor installation compartment 130 is at a lower position relative to the housing 120. When the long-range axial surface contacts the sensor installation compartment 130, the sensor installation compartment 130 is at the second operation position. In this case, the sensor installation compartment 130 is at a higher position relative to the housing 120. Specifically, the intelligent lawn mower 100 includes a manipulating element. The manipulating element is connected to the cam mechanism. The user may rotate the cam mechanism by operating the manipulating element, so as to adjust the position of the sensor installation compartment 130. **In** other embodiments, the adjustment element includes an electric motor. When the operation position of the sensor installation compartment 130 is required to be changed, the control module 160 generates control information, and the electric motor rotates to adjust the position of the sensor installation compartment 130.

In another embodiment, the intelligent lawn mower 100 can automatically switch the first operation position and the second operation position of the sensor installation compartment 130. Specifically, the intelligent lawn mower 100 has a mapping mode. In the mapping mode, the intelligent lawn mower 100 moves in the operation region and builds a map of the operation region. Upon completion of mapping, the intelligent lawn mower 100 moves and operates in the operation region. Specifically, the intelligent lawn mower 100 has an operation mode, and the intelligent lawn mower 100 moves in the operation region after completing the mapping to perform operation. Upon completion of the mapping mode, the intelligent lawn mower 100 switches to the operation mode to perform the operation, and the sensor installation compartment 130 switches the first operation position and the second operation position at least partially according to the switching of the mapping mode and the operation mode of the intelligent lawn mower 100. Specifically, in the mapping mode, the sensor installation compartment 130 is located at the first operation position. In this case, the sensor installation compartment 130 is at a lower position relative to the housing 120. Upon completion of the mapping, the sensor installation compartment 130 is at the second operation position. In this case, the sensor installation compartment 130 is at a higher position relative to the housing 120. The sensor installation compartment 130 is at the second operation position by default to identify the object in the operation region and avoid the obstacle. When the mapping mode is required to be enabled, or when the operation mode is required to be started upon completion of the mapping mode, the control module 160 sends the control information to the sensor installation compartment 130 to realize automatic switching between the first operation position and the second operation position. In another embodiment, the intelligent lawn mower 100 can switch the first operation position and the second operation position of the sensor installation compartment 130 in response to receiving of the control information from the user. Specifically, the user may send an instruction by using a remote device such as a smart phone or a mobile computer, so that the position of the sensor installation compartment 130 performs a corresponding action according to the instruction.

## Claims

1. An automatic operation system, comprising an intelligent lawn mower (20,100), the intelligent lawn mower (20,100) comprising:
a housing (27,120);
a moving module (21,150), configured to drive the intelligent lawn mower (20,100) to move;
a cutting module (170), configured to perform cutting;
an energy module (25,140), configured to provide energy for the intelligent lawn mower;
an image capturing module (26), configured to capture image information near the intelligent lawn mower (20,100), and control movement and/or operation of the intelligent lawn mower according to the captured image information; and
a control module (24,160), electrically connected to the moving module (21,150), the cutting module (170), and the image capturing module (26) and configured to control the intelligent lawn mower (20,100) to move and/or operate within an operation region,
wherein the intelligent lawn mower (20,100) comprises a mowing operation mode and the image capturing module (26) has a first operation position corresponding to the mowing operation mode,
**characterized in that** the intelligent lawn mower (20,100) has a monitoring operation mode, and the image capturing module (26) has a second operation position corresponding to the monitoring operation mode,
wherein in the first operation mode the image capturing module (26) is generally inclined downwards with an angle between a central axis of the field of view of the image capturing module and a vertical line in a range from 30 degrees to 60 degrees, and
wherein in the second operation mode the image capturing module is disposed with the angle between the central axis of the field of view of the image capturing module and the vertical line in a range from 70 degrees to 110 degrees.

2. The automatic operation system according to claim 1, wherein the intelligent lawn mower (20,100) further comprises an accommodating cavity (31) arranged at a front end of the housing (27,120), the accommodating cavity (31) is configured for the image capturing module (26) to be mounted, the accommodating cavity (31) has a set depth, and the image capturing module (26) is partially or completely accommodated in the accommodating cavity (31).

3. The automatic operation system according to claim 1, wherein the intelligent lawn mower (20,100) comprises an actuating mechanism configured to be connected to the housing (27,120) and the image capturing module (26), and the control module (24,160) is configured to control the actuating mechanism to drive the image capturing module (26) to switch between the first operation position and the second operation position.

4. The automatic operation system according to claim 3, wherein the actuating mechanism comprises a lifting unit (32), wherein the control module (24,160) is configured to control the lifting unit (32) to drive the image capturing module (26) to ascend and/or descend from the first operation position to the second operation position.

5. The automatic operation system according to claim 3, wherein the actuating mechanism comprises a rotatable unit (33), and the control module (24,160) is configured to control the rotatable unit (33) to drive the image capturing module (26) to rotate from the first operation position in a vertical direction by a preset angle to the second operation position.

6. The automatic operation system according to claim 1, wherein the intelligent lawn mower (20,100) identifies a boundary (2) of the operation region and performs the cutting in the mowing mode, the intelligent lawn mower (20,100) captures the image information near the intelligent lawn mower (20,100) in the monitoring mode and determines whether the image information is abnormal, and the control module (24,160) performs switching between the first operation position and the second operation position at least partially according to switching between the mowing mode and the monitoring mode.

7. The automatic operation system according to claim 6, comprising a charging station (3) configured to supply power to the intelligent lawn mower (20,100), wherein when the intelligent lawn mower (20,100) returns to the charging station (3) for charging and/or is located at the charging station (3), the control module (24,160) controls the intelligent lawn mower (20,100) to be in the monitoring mode.

8. The automatic operation system according to claim 6, wherein the operation region comprises a preset monitoring position and/or a preset monitoring region and/or a mowing region, and the intelligent lawn mower (20,100) further comprises a state switching mode, wherein in the state switching mode, the control module (24,160) controls the intelligent lawn mower (20,100) to maintain an operation state before switching and to move from a current position to the preset monitoring position and/or the preset monitoring region and/or the mowing region.

9. The automatic operation system according to claim 8, wherein when the intelligent lawn mower (20,100) reaches the preset monitoring position and/or the preset monitoring region, the intelligent lawn mower (20,100) is controlled to switch to the monitoring mode and perform monitoring at the preset monitoring position and/or in the preset monitoring region.

10. The automatic operation system according to claim 8, wherein when the intelligent lawn mower (20,100) reaches the mowing region, the intelligent lawn mower (20,100) is controlled to switch to the mowing mode and perform mowing in the mowing region (4).

11. The automatic operation system according to claim 8, wherein when the intelligent lawn mower (20,100) is in the state switching mode, the control module (24,160) controls the cutting module (170) to stop the cutting.

12. The automatic operation system according to claim 6, wherein when the intelligent lawn mower performs switching between the operation modes, the control module controls the intelligent lawn mower to stop moving and/or operating.

13. The automatic operation system according to claim 6, wherein when the intelligent lawn mower (20,100) is switched to the monitoring mode or is in the monitoring mode, the control module (24,160) controls the cutting module (170) to stop the cutting.

## Patentansprüche

1. System für automatischen Betrieb, das einen intelligenten Rasenmäher (20, 100) umfasst, wobei der intelligente Rasenmäher (20, 100) Folgendes umfasst:
ein Gehäuse (27, 120);
ein Bewegungsmodul (21, 150), das konfiguriert ist, den intelligenten Rasenmäher (20, 100) zu einer Bewegung anzutreiben;
ein Schneidemodul (170), das konfiguriert ist, ein Schneiden auszuführen;
ein Energiemodul (25, 140), das konfiguriert ist, Energie für den intelligenten Rasenmäher bereitzustellen;
ein Bilderfassungsmodul (26), das konfiguriert ist, Bildinformationen in der Nähe des intelligenten Rasenmähers (20, 100) zu erfassen und eine Bewegung und/oder einen Betrieb des intelligenten Rasenmähers entsprechend den erfassten Bildinformationen zu steuern; und
ein Steuermodul (24, 160), das mit dem Bewegungsmodul (21, 150), dem Schneidemodul (170) und dem Bilderfassungsmodul (26) elektrisch verbunden ist und konfiguriert ist, den intelligenten Rasenmäher (20, 100) so zu steuern, dass er sich innerhalb eines Betriebsbereichs bewegt und/oder betrieben wird,
wobei der intelligente Rasenmäher (20, 100) eine Mähbetriebsart umfasst und das Bilderfassungsmodul (26) eine erste Betriebsposition entsprechend der Mähbetriebsart hat,
**dadurch gekennzeichnet, dass** der intelligente Rasenmäher (20, 100) eine Überwachungsbetrieb-Betriebsart hat und das Bilderfassungsmodul (26) eine zweite Betriebsposition entsprechend der Überwachungsbetrieb-Betriebsart hat,
wobei in der ersten Betriebsart das Bilderfassungsmodul (26) im Allgemeinen unter einem Winkel zwischen einer zentralen Achse des Sichtfelds des Bilderfassungsmoduls und einer vertikalen Linie in einem Bereich von 30 Grad bis 60 Grad nach unten geneigt ist, und
wobei in der zweiten Betriebsart das Bilderfassungsmodul unter einem Winkel zwischen der zentralen Achse des Blickfelds des Bilderfassungsmoduls und der vertikalen Linie in einem Bereich von 70 Grad bis 110 Grad angeordnet ist.

2. System für automatischen Betrieb nach Anspruch 1, wobei der intelligente Rasenmäher (20, 100) ferner einen Aufnahmehohlraum (31) umfasst, der an einem vorderen Ende des Gehäuses (27, 120) angeordnet ist, wobei der Aufnahmehohlraum (31) so konfiguriert ist, dass das Bilderfassungsmodul (26) daran montiert ist, wobei der Aufnahmehohlraum (31) eine festgelegte Tiefe hat und wobei das Bilderfassungsmodul (26) im Aufnahmehohlraum (31) teilweise oder vollständig aufgenommen ist.

3. System für automatischen Betrieb nach Anspruch 1, wobei der intelligente Rasenmäher (20, 100) einen Betätigungsmechanismus umfasst, der so konfiguriert ist, dass er mit dem Gehäuse (27, 120) und dem Bilderfassungsmodul (26) verbunden ist, und wobei das Steuermodul (24, 160) konfiguriert ist, den Betätigungsmechanismus so zu steuern, dass er das Bilderfassungsmodul (26) so antreibt, dass es zwischen der ersten Betriebsposition und der zweiten Betriebsposition umschaltet.

4. System für automatischen Betrieb nach Anspruch 3, wobei der Betätigungsmechanismus eine Hebeeinheit (32) umfasst, wobei das Steuermodul (24, 160) konfiguriert ist, die Hebeeinheit (32) zu steuern, das Bilderfassungsmodul (26) so anzutreiben, dass es von der ersten Betriebsposition zur zweiten Betriebsposition aufsteigt und/oder absteigt.

5. System für automatischen Betrieb nach Anspruch 3, wobei der Betätigungsmechanismus eine drehbare Einheit (33) umfasst und wobei das Steuermodul (24, 160) konfiguriert ist, die drehbare Einheit (33) zu steuern, das Bilderfassungsmodul (26) so anzutreiben, dass es sich von der ersten Betriebsposition in einer vertikalen Richtung um einen zuvor festgelegten Winkel zur zweiten Betriebsposition dreht.

6. System für automatischen Betrieb nach Anspruch 1, wobei der intelligente Rasenmäher (20, 100) eine Grenze (2) des Betriebsbereichs identifiziert und das Schneiden in der Mähbetriebsart ausführt, wobei der intelligente Rasenmäher (20, 100) die Bildinformationen in der Nähe des intelligenten Rasenmähers (20, 100) in der Überwachungsbetriebsart erfasst und feststellt, ob die Bildinformationen anomal sind, und wobei das Steuermodul (24, 160) ein Umschalten zwischen der ersten Betriebsposition und der zweiten Betriebsposition wenigstens zum Teil entsprechend dem Umschalten zwischen der Mähbetriebsart und der Überwachungsbetriebsart ausführt.

7. System für automatischen Betrieb nach Anspruch 6, das eine Ladestation (3) umfasst, die konfiguriert ist, dem intelligenten Rasenmäher (20, 100) Leistung zuzuführen, wobei dann, wenn der intelligente Rasenmäher (20, 100) zum Laden zur Ladestation (3) zurückkehrt und/oder sich an der Ladestation (3) befindet, das Steuermodul (24, 160) den intelligenten Rasenmäher (20, 100) so steuert, dass er in der Überwachungsbetriebsart ist.

8. System für automatischen Betrieb nach Anspruch 6, wobei der Betriebsbereich eine zuvor festgelegte Überwachungsposition und/oder einen zuvor festgelegten Überwachungsbereich und/oder einen Mähbereich umfasst und wobei der intelligente Rasenmäher (20, 100) ferner eine Zustandsumschaltbetriebsart umfasst, wobei in der Zustandsumschaltbetriebsart das Steuermodul (24, 160) den intelligenten Rasenmäher (20, 100) so steuert, dass er einen Betriebszustand beibehält, bevor er umschaltet, und sich von einer aktuellen Position zu der zuvor festgelegten Überwachungsposition und/oder zu dem zuvor festgelegten Überwachungsbereich und/oder zum Mähbereich bewegt.

9. System für automatischen Betrieb nach Anspruch 8, wobei dann, wenn der intelligente Rasenmäher (20, 100) die zuvor festgelegte Überwachungsposition und/oder den zuvor festgelegten Überwachungsbereich erreicht, der intelligente Rasenmäher (20, 100) gesteuert wird, in die Überwachungsbetriebsart umzuschalten und eine Überwachung an der zuvor festgelegten Überwachungsposition und/oder in dem zuvor festgelegten Überwachungsbereich auszuführen.

10. System für automatischen Betrieb nach Anspruch 8, wobei dann, wenn der intelligente Rasenmäher (20, 100) den Mähbereich erreicht, der intelligente Rasenmäher (20, 100) so gesteuert wird, dass er in die Mähbetriebsart umschaltet und das Mähen im Mähbereich (4) ausführt.

11. System für automatischen Betrieb nach Anspruch 8, wobei dann, wenn der intelligente Rasenmäher (20, 100) in der Zustandsumschaltbetriebsart ist, das Steuermodul (24, 160) das Schneidemodul (170) steuert, das Schneiden zu stoppen.

12. System für automatischen Betrieb nach Anspruch 6, wobei dann, wenn der intelligente Rasenmäher ein Umschalten zwischen den Betriebsarten ausführt, das Steuermodul den intelligenten Rasenmäher so steuert, dass er eine Bewegung und/oder einen Betrieb stoppt.

13. System für automatischen Betrieb nach Anspruch 6, wobei dann, wenn der intelligente Rasenmäher (20, 100) in die Überwachungsbetriebsart umgeschaltet wird oder sich in der Überwachungsbetriebsart befindet, das Steuermodul (24, 160) das Schneidemodul (170) steuert, das Schneiden zu stoppen.

## Revendications

1. Système de fonctionnement automatique, comprenant une tondeuse (20,100) à gazon intelligente, la tondeuse (20,100) à gazon intelligente comprenant :
un boîtier (27,120) ;
un module (21,150) de déplacement, configuré pour entraîner la tondeuse (20,100) à gazon intelligente à se déplacer ;
un module (170) de coupe, configuré pour effectuer une coupe ;
un module (25,140) d'énergie, configuré pour fournir de l'énergie à la tondeuse à gazon intelligente ;
un module (26) de capture d'image, configuré pour capturer des informations d'image près de la tondeuse (20,100) à gazon intelligente, et commander le mouvement et/ou le fonctionnement de la tondeuse à gazon intelligente en fonction des informations d'image capturées ; et
un module (24,160) de commande, relié électriquement au module (21,150) de déplacement, au module (170) de coupe et au module (26) de capture d'image et configuré pour commander la tondeuse (20,100) à gazon intelligente pour qu'elle se déplace et/ou fonctionne à l'intérieur d'une région de fonctionnement,
la tondeuse (20,100) à gazon intelligente comprenant un mode de fonctionnement de tonte et le module (26) de capture d'image possédant une première position de fonctionnement correspondant au mode de fonctionnement de tonte,
**caractérisé en ce que** la tondeuse (20,100) à gazon intelligente comprend un mode de fonctionnement de surveillance, et **en ce que** le module (26) de capture d'image possède une seconde position de fonctionnement correspondant au mode de fonctionnement de surveillance, dans le premier mode de fonctionnement, le module (26) de capture d'image étant généralement incliné vers le bas, un angle entre un axe central du champ de vision du module de capture d'image et une ligne verticale se situant dans une plage de 30 degrés à 60 degrés, et
dans le second mode de fonctionnement, le module de capture d'image étant disposé de telle façon que l'angle entre l'axe central du champ de vision du module de capture d'image et la ligne verticale se situe dans une plage de 70 degrés à 110 degrés.

2. Système de fonctionnement automatique selon la revendication 1, la tondeuse (20,100) à gazon intelligente comprenant en outre une cavité (31) de logement disposée à une extrémité avant du boîtier (27,120), la cavité (31) de logement étant configurée pour que le module (26) de capture d'image y soit monté, la cavité (31) de logement présentant une profondeur définie et le module (26) de capture d'image étant partiellement ou entièrement logé dans la cavité (31) de logement.

3. Système de fonctionnement automatique selon la revendication 1, la tondeuse (20,100) à gazon intelligente comprenant un mécanisme d'actionnement configuré pour être lié au boîtier (27,120) et au module (26) de capture d'image, et le module (24,160) de commande étant configuré pour commander le mécanisme d'actionnement afin d'entraîner le module (26) de capture d'image à commuter entre la première position de fonctionnement et la seconde position de fonctionnement.

4. Système de fonctionnement automatique selon la revendication 3, le mécanisme d'actionnement comprenant une unité (32) de relevage, le module (24,160) de commande étant configuré pour commander l'unité (32) de relevage afin d'entraîner le module (26) de capture d'image à monter et/ou descendre de la première position de fonctionnement à la seconde position de fonctionnement.

5. Système de fonctionnement automatique selon la revendication 3, le mécanisme d'actionnement comprenant une unité pivotante (33), et le module (24,160) de commande étant configuré pour commander l'unité pivotante (33) afin d'entraîner le module (26) de capture d'image à pivoter à partir de la première position de fonctionnement dans une direction verticale d'un angle prédéfini jusqu'à la seconde position de fonctionnement.

6. Système de fonctionnement automatique selon la revendication 1, la tondeuse (20,100) à gazon intelligente identifiant une frontière (2) de la région de fonctionnement et effectuant la coupe dans le mode de tonte, la tondeuse (20,100) à gazon intelligente capturant les informations d'image près de la tondeuse (20,100) à gazon intelligente dans le mode de surveillance et déterminant si les informations d'image sont anormales, et le module (24,160) de commande effectuant une commutation entre la première position de fonctionnement et la seconde position de fonctionnement au moins partiellement selon la commutation entre le mode de tonte et le mode de surveillance.

7. Système de fonctionnement automatique selon la revendication 6, comprenant une station (3) de charge configurée pour alimenter en électricité la tondeuse (20,100) à gazon intelligente, lorsque la tondeuse (20,100) à gazon intelligente revient à la station (3) de charge en vue d'une charge et/ou est située au niveau de la station (3) de charge, le module (24,160) de commande commandant la tondeuse (20,100) à gazon intelligente pour qu'elle soit dans le mode de surveillance.

8. Système de fonctionnement automatique selon la revendication 6, la région de fonctionnement comprenant une position de surveillance prédéfinie et/ou une région de surveillance prédéfinie et/ou une région de tonte, et la tondeuse (20,100) à gazon intelligente comprenant en outre un mode de changement d'état, le module (24,160) de commande, dans le mode de changement d'état, commandant la tondeuse (20,100) à gazon intelligente pour maintenir un état de fonctionnement avant le changement et pour se déplacer d'une position actuelle à la position de surveillance prédéfinie et/ou à la région de surveillance prédéfinie et/ou à la région de tonte.

9. Système de fonctionnement automatique selon la revendication 8, lorsque la tondeuse (20,100) à gazon intelligente atteint la position de surveillance prédéfinie et/ou la région de surveillance prédéfinie, la tondeuse (20,100) à gazon intelligente étant commandée pour passer au mode de surveillance et effectuer une surveillance à la position de surveillance prédéfinie et/ou dans la région de surveillance prédéfinie.

10. Système de fonctionnement automatique selon la revendication 8, lorsque la tondeuse (20,100) à gazon intelligente atteint la région de tonte, la tondeuse (20,100) à gazon intelligente étant commandée pour passer au mode de tonte et effectuer une tonte dans la région (4) de tonte.

11. Système de fonctionnement automatique selon la revendication 8, lorsque la tondeuse (20,100) à gazon intelligente est dans le mode de changement d'état, le module (24,160) de commande commandant le module (170) de coupe pour arrêter la coupe.

12. Système de fonctionnement automatique selon la revendication 6, lorsque la tondeuse à gazon intelligente effectue la commutation entre les modes de fonctionnement, le module de commande commandant la tondeuse à gazon intelligente pour qu'elle cesse de se déplacer et/ou de fonctionner.

13. Système de fonctionnement automatique selon la revendication 6, lorsque la tondeuse (20,100) à gazon intelligente est commutée vers le mode de surveillance ou se trouve dans le mode de surveillance, le module (24,160) de commande commandant le module (170) de coupe pour arrêter la coupe.
